# EUROPEAN PATENT SPECIFICATION

(11) **EP 3 090 928 B1**
(45) Date of publication and mention of the grant of the patent: **28.03.2018**
(21) Application number: 16166498.2
(22) Date of filing: 21.04.2016
(51) Int. Cl.: B62D 33/06, E02F 9/16, B60J 5/04, E02F 9/08

(54) **CABIN FOR A VEHICLE, IN PARTICULAR FOR AN AGRICULTURAL TRACTOR**
KABINE FÜR EIN FAHRZEUG, INSBESONDERE FÜR EINEN LANDWIRTSCHAFTLICHEN TRAKTOR
CABINE POUR UN VÉHICULE, EN PARTICULIER POUR UN TRACTEUR AGRICOLE

(30) Priority: 22.04.2015 IT UB20150409
(43) Date of publication of application: 09.11.2016
(73) Proprietor: SAME DEUTZ-FAHR ITALIA S.p.A., 24047 TREVIGLIO (BG) (IT)
(72) Inventor: DAINOTTO, Paolo, 24047 TREVIGLIO (BG) (IT)
(74) Representative: Branca, Emanuela

(56) References cited:
- EP-A2- 1 332 901
- WO-A1-98/16709
- DE-A1- 2 126 375
- DE-A1- 2 733 166
- DE-T5-112012 006 544
- US-A- 4 956 942

## Description

The present invention refers to a cabin for a vehicle, in particular for an agricultural tractor, as well as to an adjustment device of a panel of such a cabin, like for example the window of a door.

The main function of the cabin of a vehicle is to protect the driver and the possible passengers. The cabin must also make the vehicle as comfortable as possible to use, whether it is an automobile rather than operating or farming machinery. In particular, the cabin of a farming machine, like for example a tractor, must not only make the work of the operator comfortable, but must also ensure the maximum visibility in any operative condition.

The current cabins for agricultural tractors are characterised by large paned surfaces, by a windscreen and/or by a sometimes openable rear window, so as to improve the aeration of the cabin itself, as well as by doors made almost entirely with transparent panels, so as to increase lateral visibility for the driver. These cabins can also be provided with access point and emergency exits. All of the panels, whether paned, opaque, openable or fixed, of the cabin of an agricultural tractor are usually mounted on a frame fixed on the bearing structure of the vehicle.

The doors and, in general, all of the openable panels of a cabin for an agricultural tractor, once closed, must be correctly sealed with respect to the frame, so as to avoid both the entry of various substances (water, harmful gases, etc.), and the exit of air (loss of pressurization). The frame of the cabin and the relative openable panels generally consist of rigid systems, which sealingly couple through gaskets. The gaskets are capable of compressing and adapting to small variations in position of the panels with respect to the frame when such panels are in their closed configuration.

With respect to the design characteristics, the components of a cabin for vehicles can undergo dimensional and position variations due to productions and technological problems. Moreover, the tolerances between the various components of a cabin can vary by an amount that generally increases at the wear of the vehicle increases. In addition, the climatic conditions in which the vehicle operates can also influence, within certain limits, the tolerances between the various components of a cabin. For example, the thermal expansions caused by particularly high temperatures can vary, even if reversibly, the position of the panels with respect to the frame, in particular as far as the doors are concerned.

Consequently, the gaskets are not always able to compensate for the aforementioned variations in position, especially when such variations exceed a certain tolerance. In other words, with reference for example to the door opening of a cabin, due to possible deformations and/or variations in position of the door the relative gasket may not be correctly compressed, or even in some sections not adhere at all to the perimeter edge of the door opening.

At the current state of the art, a possible solution consists of intervening on the hinges that connect the door to the frame of the cabin. However, this solution, as well as being very complicated and ensuring very limited adjustment possibilities, can compromise the modes of opening/closing and of connection of the door with respect to the frame of the cabin. Other adjustment devices of a panel of a cabin, typically the window of a door, are described for example in documents DE 21 26 375 A1 and EP 1 332 901 A2.

The aim of the present invention is therefore to make a cabin for a vehicle, in particular for an agricultural tractor, which is able to solve the aforementioned drawbacks of the prior art in an extremely simple, cost-effective and particularly functional manner.

In detail, an aim of the present invention is to make a cabin for a vehicle in which it is possible to compensate for the possible variations in shape and size of the panels (in particular but not exclusively the doors) with respect to the frame of such a cabin, in order to obtain the best possible seal by the gaskets.

Another aim of the present invention is to make a cabin for a vehicle provided with an adjustment device of the panels that is simple to make and to use.

These and other aims according to the present invention are accomplished by making a cabin for a vehicle, in particular for an agricultural tractor, as outlined in claim 1.

Further features of the invention are highlighted by the dependent claims, which are an integral part of the present description.

The features and advantages of a cabin for a vehicle, in particular for an agricultural tractor, according to the present invention will become clearer from the following description, given as an example and not for limiting purposes, referring to the attached schematic drawings, in which:
figure 1 is a perspective view of an agricultural tractor on which a preferred embodiment of the cabin according to the present invention is mounted;
figure 2 is a perspective view of the cabin shown in figure 1, without the roof and provided with a single covering panel, in particular a door;
figure 3 is a perspective view, from the inside, of a panel, in particular a door, of the cabin of figure 2;
figure 4 is a section view, from the inside, of the door of figure 3;
figure 5 is another section view, from the inside, of the door of figure 3;
figures 6 and 7 are respective section views that show, in a first operative configuration, an adjustment device of a panel of the cabin of figure 2;
figures 8 and 9 are respective section views that show, in a second operative configuration, an adjustment device of a panel of the cabin of figure 2;
figures 10 and 11 are respective section views that show, in a third operative configuration, an adjustment device of a panel of the cabin of figure 2;
figure 12 is a perspective view of an agricultural tractor on which a variant embodiment of the cabin according to the present invention is mounted; and
figure 13 is a section view of an adjustment device of the cabin of figure 12.

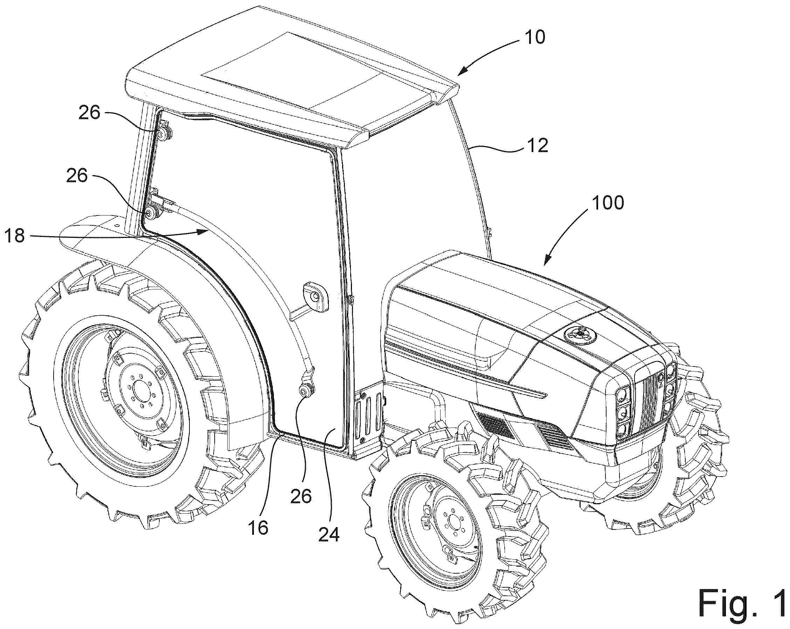

With reference in particular to figure 1, a vehicle with an internal combustion engine, in particular an agricultural tractor, is shown, on which a cabin according to the present invention is mounted. The vehicle is wholly indicated with reference numeral 100, whereas the cabin is wholly indicated with reference numeral 10.

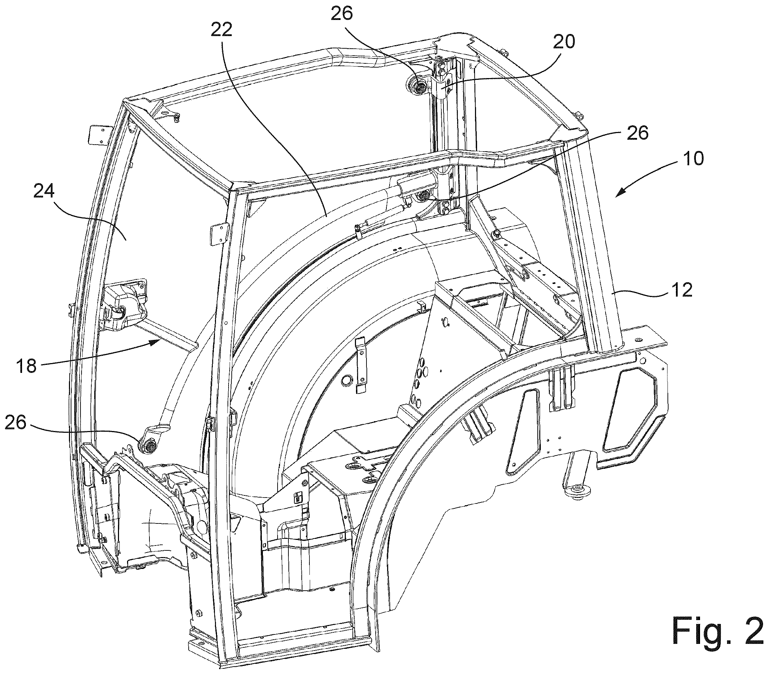

Now with reference to figure 2, a preferred embodiment of the cabin 10 is shown. The cabin 10 is provided with a frame 12 configured to be fixed onto the bearing structure of the vehicle 100. A plurality of panels 14, for example consisting of one or more doors, a windscreen, a rear window and one or more possible further panels, like for example the roof, is mounted on the frame 12, in a fixed or openable manner.

All of the panels 14, whether openable or not, are configured so as to maintain the cabin 10 sealingly closed in the operative configuration of the vehicle 100. For this purpose, each panel 14, in particular if it is of the openable type, is advantageously provided with at least one sealing gasket 16 that is interposed between such a panel 14 and the frame 12 of the cabin 10.

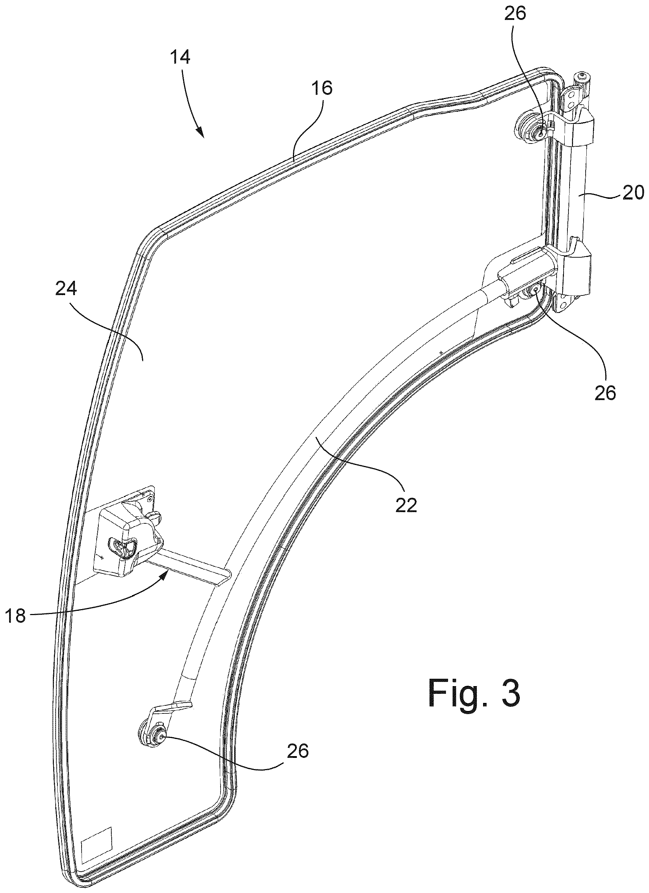

In detail, with reference for example to figure 3, at least part of the panels 14, typically openable ones including for example the doors of the vehicle 100, is provided with a support structure 18 configured for constraining the relative panel 14 to the frame 12. In the case of the door 14, for example, the support structure 18 consists of a hinge group 20, rotatably connected to the frame 12, and of a handle 22, integral both with the hinge group 20, and with a sheet-like element 24, preferably made entirely from a transparent material, which forms the door 14. In this case, therefore, the support structure 18 is arranged on the internal surface of the respective door 14 so that the handle 22 can be grasped from inside the cabin 10. The hinge group 20 is advantageously configured for rotating the respective door 14 with respect to a vertical axis, or in any case substantially perpendicular to a resting plane of the vehicle 100.

If the panel 14 consists, for example, of a windscreen or a tilting rear window, of the type commonly mounted on some cabins of farming machines in general, the support structure 18 would be configured in a manner suitable for ensuring that the driver has maximum visibility. In the case of a windscreen or tilting rear window, moreover, the hinge group 20 could be configured for rotating such a windscreen or rear window with respect to a horizontal axis, or in any case substantially parallel to a resting plane of the vehicle 100.

According to the invention, between each panel 14 and the respective support structure 18 one or more slidable connection and adjustment means 26 are interposed that allow a linear displacement of the panel 14 to be performed with respect to its support structure 18 and, thus, allows the position of such a panel 14 to be adjusted with respect to the frame 12 of the cabin 10. In the case of the door 14, for example, at least one slidable connection and adjustment means 26, arranged at the handle 22, and a pair of slidable connection and adjustment means 26, arranged at the hinge group 20, can be provided.

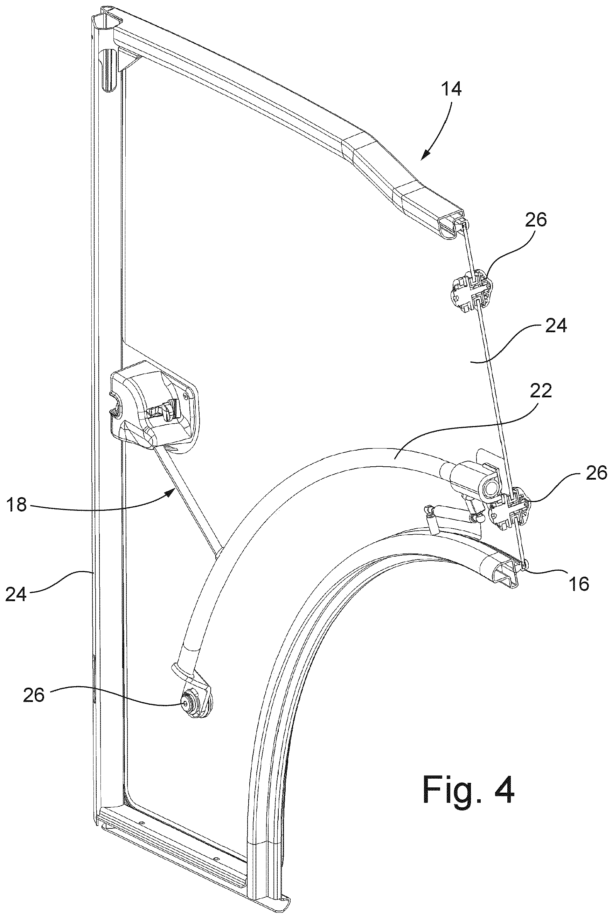

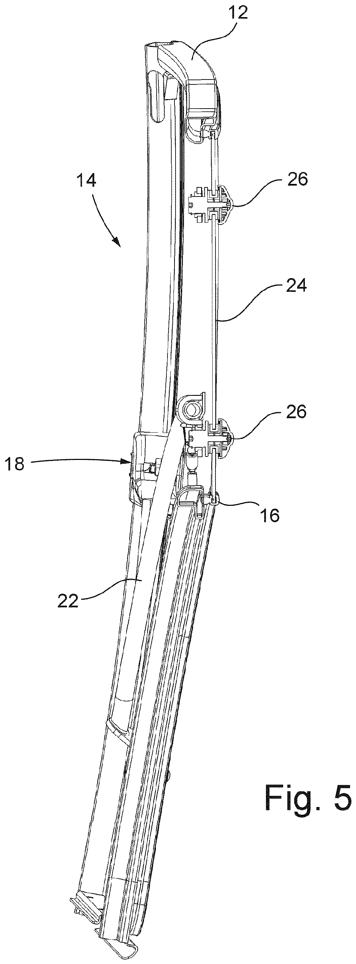

In detail, with reference to the example embodiment shown in figures 3 to 11, each slidable connection and adjustment means 26 consists of a threaded bushing provided with a screw element 28, integral with the door 14, and with a nut screw element 30, integral with the support structure 18 and engageable in sliding coupling with such a screw element 28. The screw element 28 and the nut screw element 30 are configured for sliding along a direction substantially perpendicular to the development plane of the door 14, so as to move away or approach such a door 14 with respect to the door opening formed on the frame 12. However, this does not rule out the possibility of the screw element 28 being integral with the support structure 18 and the nut screw element 30 being integral with the door 14, while maintaining the sliding coupling between such a screw element 28 and such a nut screw element 30.

In the example embodiment shown in figures 3 to 11 the screw element 28 is integral with the door 14 through the interposition of a sleeve 32 that engages in a corresponding hole made in the door 14 itself. The internal hole of the sleeve 32 has an internal diameter that is greater than the external diameter of the screw element 28, so as to allow relative movements between sleeve 32 and screw element 28 and, thus, obtain a movement (although limited) of the door 14 along its development plane. In this way, there is the possibility of adjusting the position of the door 14 also in the vertical direction with respect to the door opening formed on the frame 12.

The adjustment of each single bushing 26 is independent and can be carried out both from inside, and from outside the cabin 10. The rotation of each bushing 26 thus corresponds to a linear variation of the distance apart of the elements involved in the adjustment, in other words the portion of panel 14 on which such a bushing 26 is installed and the respective support structure 18.

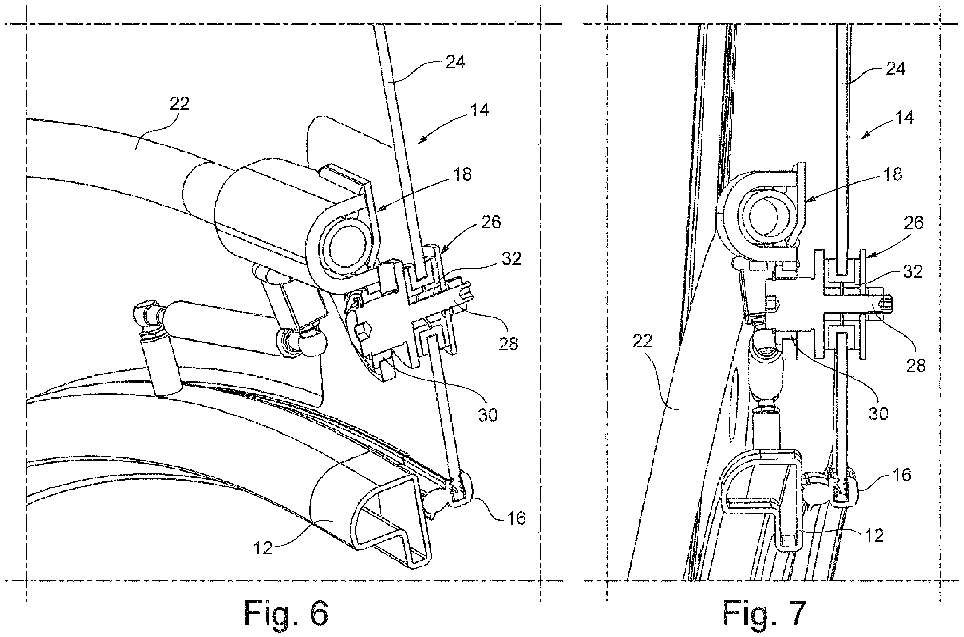

Figures 6 and 7 show an operative condition in which the bushing 26 is completely drawn-out. In this operative condition the door 14 is in the position of maximum distance with respect to its support structure 18 and, therefore, with respect to the frame 12 of the cabin 10. This maximum distance is highlighted by the fact that the sealing gasket 16 of the door 14, configured to go into abutment against a corresponding portion of frame 12, is minimally or not at all compressed.

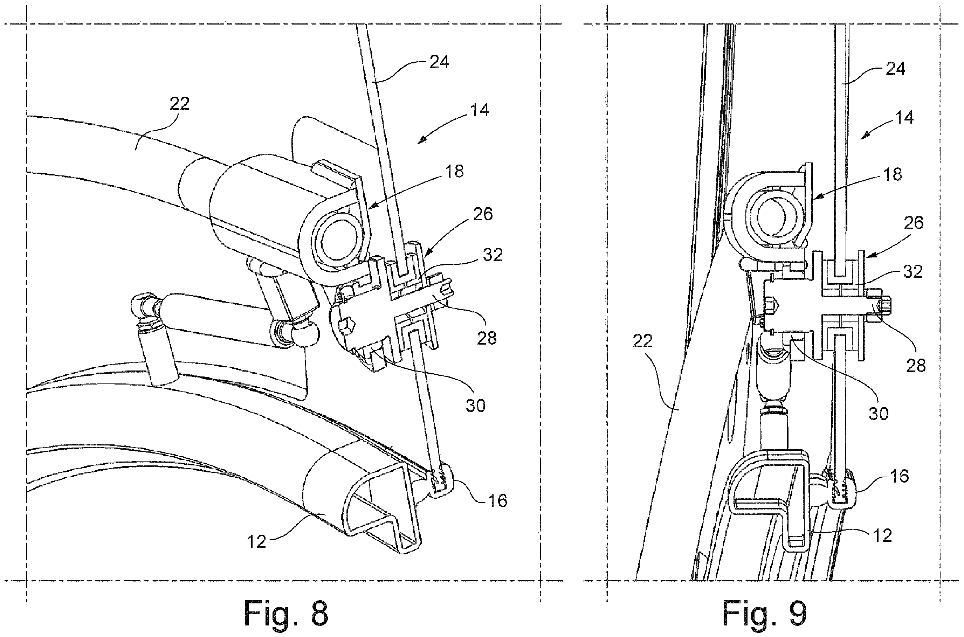

Figures 8 and 9 show an operative condition in which the bushing 26 is in intermediate position, in other words actuated up to half of its stroke. In this operative condition the door 14 is in a position of intermediate distance with respect to its support structure 18 and, therefore, with respect to the frame 12 of the cabin 10. This intermediate distance is highlighted by the fact that the sealing gasket 16 of the door 14 is compressed by a medium amount.

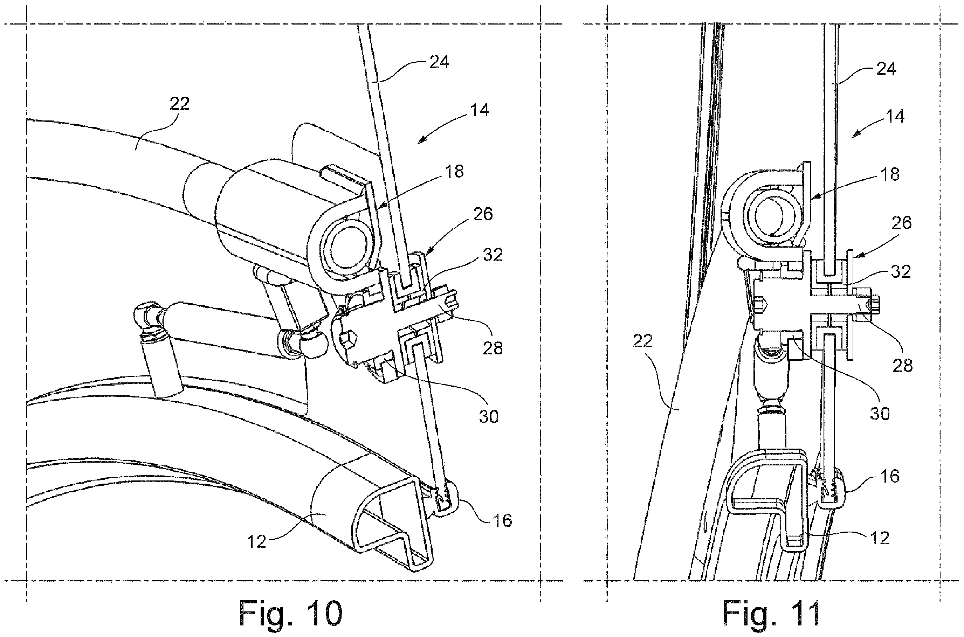

Finally, figures 10 and 11 show an operative condition in which the bushing 26 is completely drawn-in. In this operative condition the door 14 is in the position of minimum distance with respect to its support structure 18 and, therefore, with respect to the frame 12 of the cabin 10. This minimum distance is highlighted by the fact that the sealing gasket 16 of the door 14 is in a condition of maximum compression.

Between the two maximum extremes, established by design according to the requirements, the adjustment of each bushing 26 is continuous and provides for an indefinite number of positions. In any case, in the manufacturing step of the cabin 10, each bushing 26 can be pre-adjusted in its intermediate position, so that the respective panel 14, whether it is a door or not, adheres to the frame 12 according to the nominal design settings of the cabin 10.

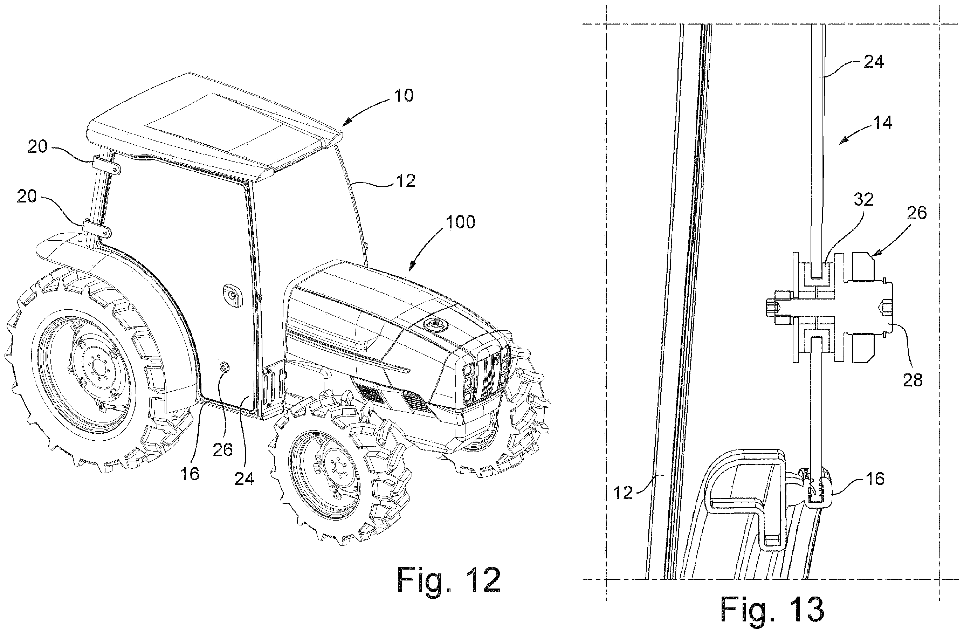

Figures 12 and 13 show a variant embodiment of the cabin 10, as well as of the respective bushings 26. In this variant embodiment each bushing 26 is configured to be mounted on a support structure 18 arranged on the external surface of the panel 14, in this case the door of the cabin 10. In this variant embodiment, therefore, the hinge group 20 is also arranged on the external surface of the panel 14 and an external handle 22 on which further bushings 26 are possibly mounted may or may not be provided. Even if they are housed on the external hinge group 20, the bushings 26 are still able to ensure the adjustment of the distance between the door 14 and the relative opening formed in the frame 12 of the cabin 10.

It has thus been seen that the cabin for a vehicle, in particular for an agricultural tractor, according to the present invention achieves the purposes outlined earlier, in particular obtaining the following advantages:
- optimisation of the compression of the sealing gasket of the panels, in particular of the doors;
- sealing of the cabin, avoiding the entry and/or exit of fluids and dusts;
- guaranteed pressurization of the cabin;
- improvement of the quality of the assembly processes;
- compensation of the production tolerances of the different elements of the panels of the cabin, in particular of the doors, with consequent decrease in assembly defects;
- speed of adjustment;
- reduction of repair interventions, at the end of the assembly line, for the adjustments of the doors, which can be carried out quickly already on the assembly line of the cabins.

The cabin for a vehicle, in particular for an agricultural tractor, of the present invention thus conceived can in any case undergo numerous modifications and variants, all of which are encompassed by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Cabin (10) for a vehicle (100) provided with a frame (12) configured for being fixed on the bearing structure of said vehicle (100), the cabin (10) comprising a plurality of panels (14) mounted on said frame (12), wherein at least part of said panels (14) is provided both with a support structure (18), configured for constraining the relative panel (14) to the frame (12), and at least one sealing gasket (16), which is interposed between said panel (14) and said frame (12) in order to maintain the cabin (10) sealingly closed in the operative configuration of the vehicle (100), between each panel (14) and the respective support structure (18) one or more slidable connection and adjustment means (26) being interposed, which allow performing a linear displacement of the panel (14) with respect to its support structure (18) and, thus, adjusting the position of said panel (14) with respect to the frame (12) of the cabin (10), the cabin (10) being **characterised in that** each slidable connection and adjustment means (26) consists of a threaded bushing provided with a screw element (28) and with a nut screw element (30) that is engageable in slidable coupling with said screw element (28), said screw element (28) and said nut screw element (30) being configured for sliding along a direction substantially perpendicular to the development plan of the panel (14), so as to move away or approach said panel (14) with respect to the frame (12).

2. Cabin (10) according to claim 1, **characterised in that** said screw element (28) is integral with the panel (14) and said nut screw element (30) is integral with the support structure (18).

3. Cabin (10) according to claim 2, **characterised in that** said screw element (28) is made integral with the panel (14) by interposing a sleeve (32) that is inserted into a corresponding hole made in said panel (14), the internal hole of the sleeve (32) having an internal diameter greater than the external diameter of the screw element (28), so as to allow relative movements between said sleeve (32) and said screw element (28) and, thus, obtain a movement of the panel (14) along its own development plane.

4. Cabin (10) according to claim 1, **characterised in that** said screw element (28) is integral with the support structure (18) and said nut screw element (30) is integral with the panel (14).

5. Cabin (10) according to any claims 1 to 4, **characterised in that** said plurality of panels (14) is constituted by the doors of said cabin (10).

6. Cabin (10) according to claim 5, **characterised in that** the support structure (18) consists of a hinge group (20), rotatably connected to the frame (12), and of a handle (22), integral both with the hinge group (20) and with a sheet-like element (24) that forms each of said doors (14).

7. Cabin (10) according to claim 6, **characterised in that** it comprises at least one slidable connection and adjustment means (26) arranged at the handle (22) and a pair of slidable connection and adjustment means (26) arranged at the hinge group (20).

8. Cabin (10) according to claim 6 or 7, **characterised in that** the support structure (18) is arranged on the internal surface of the respective door (14), so that the handle (22) can be grasped from inside the cabin (10).

9. Cabin (10) according to any claims 1 to 5, **characterised in that** each slidable connection and adjustment means (26) is configured for being mounted on a support structure (18) arranged on the external surface of the panel (14).

## Patentansprüche

1. Kabine (10) für ein Fahrzeug (100), die mit einem Rahmen (12) versehen ist, der ausgebildet ist, um auf der Tragstruktur des Fahrzeugs (100) befestigt zu werden, wobei die Kabine (10) eine Mehrzahl von Paneelen (14) umfasst, die auf dem Rahmen (12) eingebaut sind, wobei wenigstens ein Teil der Paneele (14) sowohl mit einer Stützstruktur (18) versehen ist, die ausgebildet ist, um das relative Paneel (14) mit dem Rahmen (12) zu verbinden, als auch mit wenigstens einer Dichtung (16), die zwischen dem Paneel (14) und dem Rahmen (12) eingefügt ist, um die Kabine (10) in der betriebsbereiten Konfiguration des Fahrzeugs (100) dicht geschlossen zu halten, wobei zwischen jedem Paneel (14) und der entsprechenden Stützstruktur (18) ein oder mehrere verschiebbare Verbindungs- und Einstellmittel (26) eingefügt sind, die eine lineare Verschiebung des Paneels (14) in Bezug auf seine Stützstruktur (18) und folglich die Einstellung der Position des Paneels (14) in Bezug auf den Rahmen (12) der Kabine (10) erlauben, wobei die Kabine (10) **dadurch gekennzeichnet ist, dass** die verschiebbaren Verbindungs- und Einstellmittel (26) jeweils aus einer Gewindebuchse bestehen, die mit einem Schraubenelement (28) und mit einem Schraubenmutterelement (30) versehen sind, das in verschiebbarer Kupplung mit dem Schraubenelement (28) einkuppelbar ist, wobei das Schraubenelement (28) und das Schraubenmutterelement (30) ausgebildet sind, um sich längs einer Richtung zu verschieben, die im Wesentlichen senkrecht zur Abwicklungsebene des Paneels (14) verläuft, um sich in Bezug auf den Rahmen (12) von dem Paneel (14) weg oder zu ihm hin zu bewegen.

2. Kabine (10) nach Anspruch 1, **dadurch gekennzeichnet, dass** das Schraubenelement (28) einstückig mit dem Paneel (14) ausgebildet ist und das Schraubenmutterelement (30) einstückig mit der Stützstruktur (18) ausgebildet ist.

3. Kabine (10) nach Anspruch 2, **dadurch gekennzeichnet, dass** das Schraubenelement (28) einstückig mit dem Paneel (14) durch Einfügen einer Hülse (32) ausgebildet ist, die in ein entsprechendes Loch auf dem Paneel (14) eingefügt ist, wobei das Innenloch der Hülse (32) einen Innendurchmesser aufweist, der größer als der Außendurchmesser des Schraubenelements (28) ist, um relative Bewegungen zwischen der Hülse (32) und dem Schraubenelement (28) zu erlauben und folglich eine Bewegung des Paneels (14) längs seiner eigenen Abwicklungsebene zu erhalten.

4. Kabine (10) nach Anspruch 1, **dadurch gekennzeichnet, dass** das Schraubenelement (28) einstückig mit der Stützstruktur (18) ausgebildet ist und das Schraubenmutterelement (30) einstückig mit dem Paneel (14) ausgebildet ist.

5. Kabine (10) nach einem der Ansprüche 1 bis 4, **dadurch gekennzeichnet, dass** die Mehrzahl der Paneele (14) aus den Türen der Kabine (10) besteht.

6. Kabine (10) nach Anspruch 5, **dadurch gekennzeichnet, dass** die Stützstruktur (18) aus einer Scharniergruppe (20) besteht, die drehbar mit dem Rahmen (12) verbunden ist, und aus einem Griff (22), der einstückig mit der Scharniergruppe (20) und mit einem blechartigen Element (24) ausgebildet ist, das jeweils die Türen (14) bildet.

7. Kabine (10) nach Anspruch 6, **dadurch gekennzeichnet, dass** sie wenigstens ein verschiebbares Verbindungs- und Einstellmittel (26) umfasst, das an dem Griff (22) angeordnet ist, und ein Paar von verschiebbaren Verbindungs- und Einstellmitteln (26), die an der Scharniergruppe (20) angeordnet sind.

8. Kabine (10) nach Anspruch 6 oder 7, **dadurch gekennzeichnet, dass** die Stützstruktur (18) auf der Innenfläche der jeweiligen Tür (14) angeordnet ist, so dass der Griff (22) von dem Innenraum der Kabine (10) aus gefasst werden kann.

9. Kabine (10) nach einem der Ansprüche 1 bis 5, **dadurch gekennzeichnet, dass** jedes verschiebbare Verbindungs- und Einstellmittel (26) ausgebildet ist, um auf einer Stützstruktur (18) eingebaut und auf der Außenfläche des Paneels (14) angeordnet zu werden.

## Revendications

1. Cabine (10) d'un véhicule (100) munie d'un châssis (12) configuré pour être fixé sur la structure porteuse dudit véhicule (100), la cabine (10) comprenant une pluralité de panneaux (14) montés sur ledit châssis (12), dans laquelle au moins une partie desdits panneaux (14) est pourvue à la fois d'une structure de support (18) configurée pour contraindre le panneau (14) relatif au châssis (12) et d'au moins un joint d'étanchéité (16), qui est interposé entre ledit panneau (14) et ledit châssis (12) afin de maintenir la cabine (10) fermée de manière étanche dans la configuration opérationnelle du véhicule (100), un ou plusieurs moyens de liaison et de réglage coulissants (26) étant interposés entre chaque panneau (14) et la structure de support respective (18), qui permettent d'effectuer un déplacement linéaire du panneau (14) par rapport à sa structure de support (18) et d'ainsi ajuster la position dudit panneau (14) par rapport au châssis (12) de la cabine (10), la cabine (10) étant **caractérisée en ce que** chaque moyen de liaison et de réglage coulissant (26) se compose d'une douille filetée munie d'un élément de vis (28) et d'un élément d'écrou (30) qui peut s'engager par couplage coulissant avec ledit élément de vis (28), ledit élément de vis (28) et ledit élément d'écrou (30) étant configurés pour coulisser le long d'une direction sensiblement perpendiculaire au plan de développement du panneau (14), de manière à éloigner ou à rapprocher ledit panneau (14) par rapport au châssis (12).

2. Cabine (10) selon la revendication 1, **caractérisée en ce que** ledit élément de vis (28) est solidaire du panneau (14) et ledit élément d'écrou (30) est solidaire de la structure de support (18).

3. Cabine (10) selon la revendication 2, **caractérisée en ce que** ledit élément de vis (28) est solidarisé au panneau (14) en interposant un manchon (32) qui est inséré dans un trou correspondant réalisé dans ledit panneau (14), le trou interne du manchon (32) ayant un diamètre interne supérieur au diamètre externe de l'élément de vis (28), de manière à permettre des mouvements relatifs entre ledit manchon (32) et ledit élément de vis (28) et ainsi à obtenir un mouvement du panneau (14) le long de son propre plan de développement.

4. Cabine (10) selon la revendication 1, **caractérisée en ce que** ledit élément de vis (28) est solidaire de la structure de support (18) et ledit élément d'écrou (30) est solidaire du panneau (14).

5. Cabine (10) selon l'une quelconque des revendications 1 à 4, **caractérisée en ce que** ladite pluralité de panneaux (14) est constituée par les portes de ladite cabine (10).

6. Cabine (10) selon la revendication 5, **caractérisée en ce que** la structure de support (18) est constituée d'un groupe charnière (20) relié de manière rotative au châssis (12) et d'une poignée (22) solidaire à la fois du groupe charnière (20) et d'un élément en forme de feuille (24) qui forme chacune desdites portes (14).

7. Cabine (10) selon la revendication 6, **caractérisée en ce qu'**elle comprend au moins un moyen de liaison et de réglage coulissant (26) agencé au niveau de la poignée (22) et une paire de moyens de liaison et de réglage coulissants (26) disposés au niveau du groupe charnière (20).

8. Cabine (10) selon la revendication 6 ou 7, **caractérisée en ce que** la structure de support (18) est agencée sur la surface interne de la porte (14) respective, de sorte que la poignée (22) peut être saisie depuis l'intérieur de la cabine (10).

9. Cabine (10) selon l'une quelconque des revendications 1 à 5, **caractérisée en ce que** chaque moyen de liaison et de réglage coulissant (26) est configuré pour être monté sur une structure de support (18) agencée sur la surface externe du panneau (14).
